# EUROPÄISCHE PATENTSCHRIFT

(11) **EP 0 571 569 B1**
(45) Veröffentlichungstag und Bekanntmachung des Hinweises auf die Patenterteilung: **22.05.1996**
(21) Anmeldenummer: 92923588.5
(22) Anmeldetag: 18.11.1992
(51) Int. Cl.: B60S 9/12

(54) **EINRICHTUNG ZUM HOCHSCHWENKEN EINER STÜTZE EINES LASTFAHRZEUGES**
DEVICE FOR PIVOTING A TRUCK STABILIZER JACK UPWARDS
DISPOSITIF PERMETTANT DE FAIRE PIVOTER LE VERIN STABILISATEUR D'UN POIDS LOURD VERS LE HAUT

(30) Priorität: 13.12.1991 AT 2481/91
(43) Veröffentlichungstag der Anmeldung: 01.12.1993
(73) Patentinhaber: PALFINGER AKTIENGESELLSCHAFT, A-5101 Bergheim/Salzburg (AT)
(72) Erfinder: WIMMER, Eckhard, A-5400 Hallein (AT)
(74) Vertreter: Hofinger, Engelbert, DDr.
(86) Internationale Anmeldenummer: AT9200149
(87) Internationale Veröffentlichungsnummer: WO9311981

(56) Entgegenhaltungen:
- CH-A- 528 993
- DE-A- 3 409 476
- US-A- 4 865 295

## Beschreibung

Die Erfindung bezieht sich auf eine Einrichtung zum Hochschwenken einer hydraulisch ein- und ausfahrbaren Stütze eines Lastfahrzeuges um eine erste fahrzeugfeste Schwenkachse, wobei das freie Ende der Stütze an einer begrenzt einfahrbaren Teleskopstange angelenkt ist.

Wenn durch einen auf einem Lastfahrzeug montierten Ladekran größere Lasten gehoben werden sollen, so ist es üblich, die Räder des Fahrzeuges durch teleskopartig ausfahrbare Stützen zu entlasten. Diese Stützen, die üblicherweise an seitlich ausfahrbaren Auslegern angelenkt sind, sollen während der Fahrt des Fahrzeuges nach Möglichkeit nach oben verschwenkt sein. Mit zunehmender Höhe des Fahrzeuges und zunehmender Masse der Stütze wird ein derartiges verschwenken ohne maschinelle Hilfsmittel bald unmöglich.

Eine Einrichtung der eingangs genannten Art ist aus der DE-A-3 409 476 bekannt. Damit kann eine Stütze selbsttätig hochgeschwenkt werden, allerdings nur bis zu einer waagrechten Position der Stütze und nicht weiter bis zu einer vorteilhaften senkrecht nach aufwärts weisenden Position.

Aufgabe der Erfindung ist es, mit möglichst geringem zusätzlichen mechanischen Aufwand, insbesondere ohne zusätzliche Hydraulik, ein selbsttätiges Hochschwenken der Stütze zu ermöglichen. Diese Aufgabe wird erfindungsgemäß dadurch gelöst, daß die Teleskopstange an einem Schwenkteil schwenkbar gelagert ist, der um eine zweite fahrzeugfeste Achse bis zu einem fahrzeugfesten Anschlag verschwenkbar ist.

Der erfindungsgemäß vorgesehene Schwenkteil erlaubt es, die die Stütze nach oben lenkende Teleskopstange zunächst um deren Schwenkachse am Schwenkteil und dann gemeinsam mit diesem um dessen Schwenkachse zu bewegen, was den Schwenkbereich praktisch verdoppelt, wie später im einzelnen erläutert werden soll.

Ein besonderer Vorteil der vorgeschlagenen Einrichtung liegt darin, daß die Kraft zum Hochschwenken der Stütze von der ohnehin zum Einfahren der Stütze notwendigen Hydraulik geliefert wird. Die vorgeschlagene Einrichtung ermöglicht nicht nur ein einfaches Hochschwenken der Stütze, sondern vermeidet auch die Gefahr eines unkontrollierten Herabstürzens der Stütze, welche in Hinblick auf deren in der Größenordnung von 100 kg liegenden Masse nicht zu unterschätzen ist.

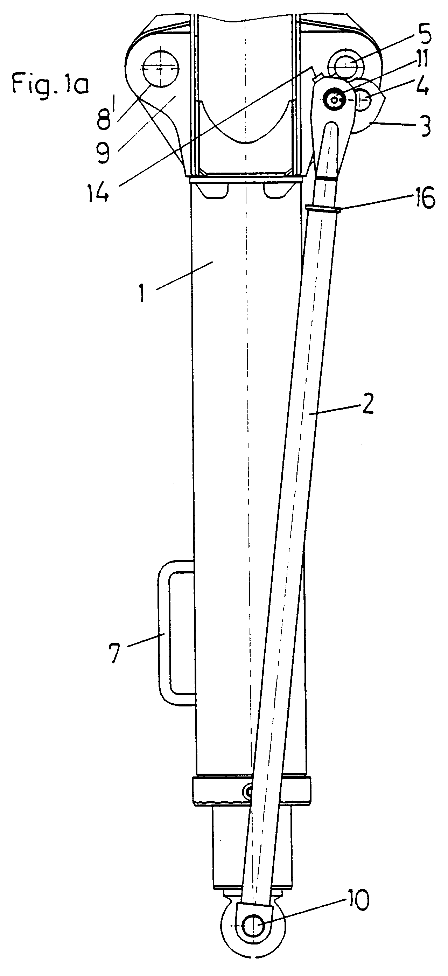

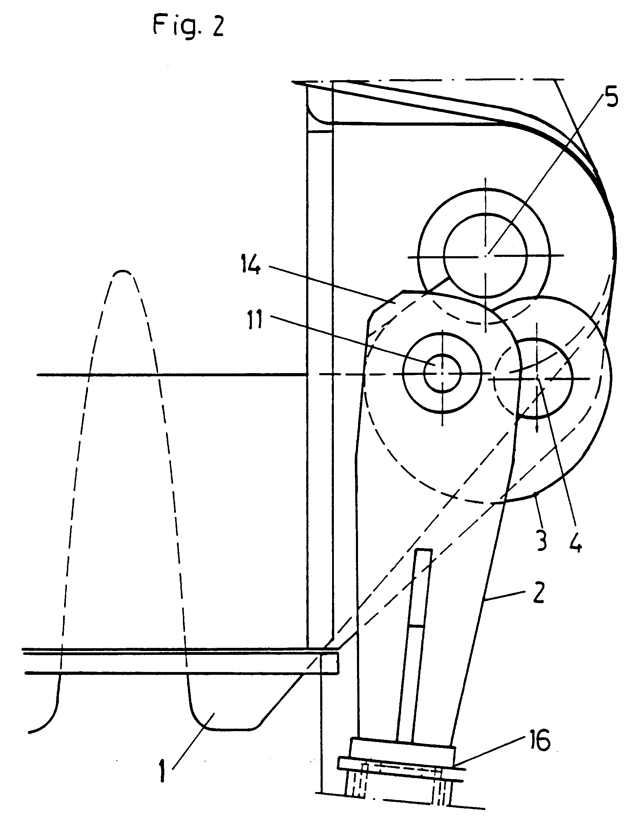

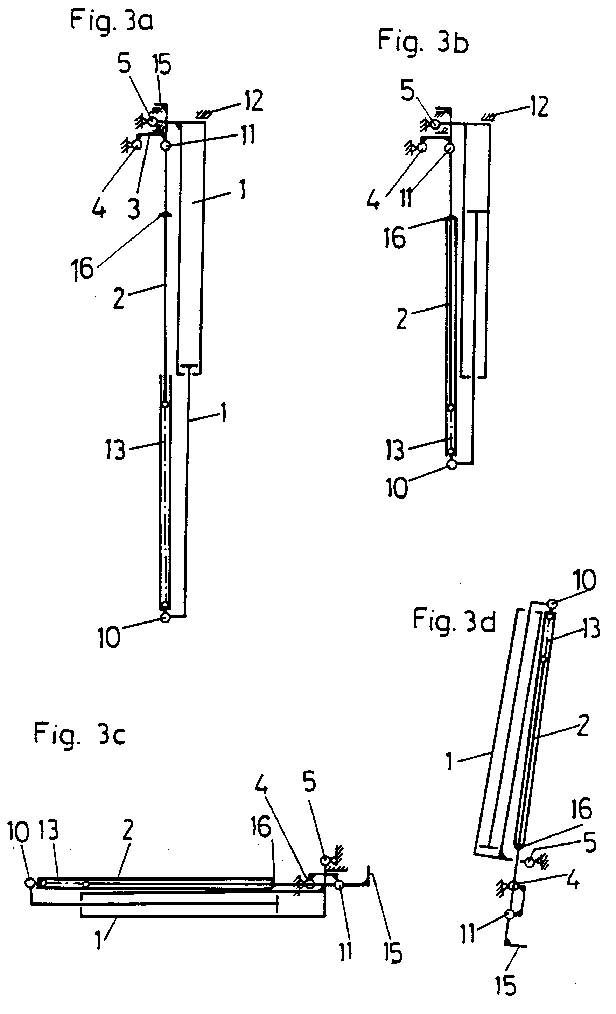

Weitere Einzelheiten der Erfindung werden anschließend anhand der Zeichnung erläutert. Dabei zeigt
Fig. 1a - d ein erstes Ausführungsbeispiel der erfindungsgemäßen Einrichtung in vier Bewegungsstadien, Fig. 2 zeigt einen vergrößerten Ausschnitt des die Kinematik bestimmenden Teiles der Einrichtung gemäß von Fig. 1a, Fig. 3a - d zeigt schematisch den Bewegungsablauf eines weiteren Ausführungsbeispiels.

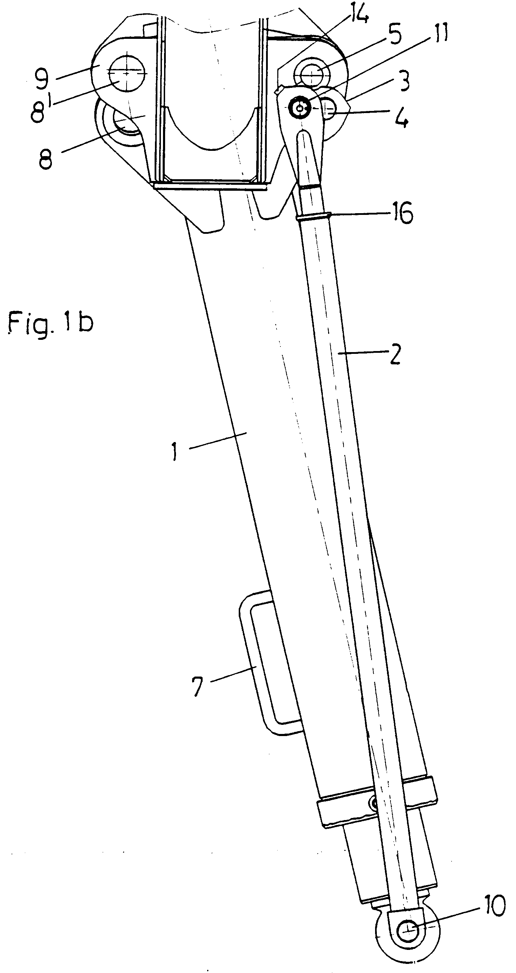

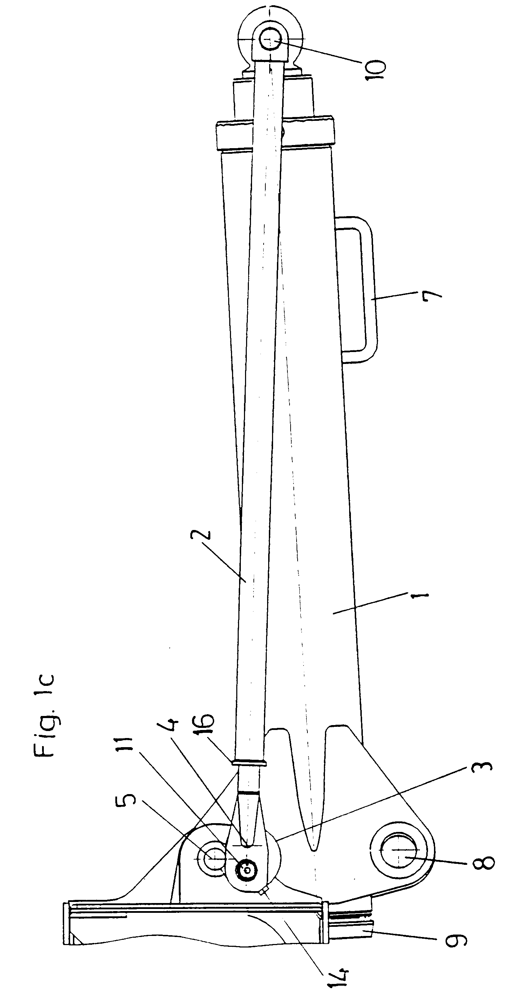

Um die Stütze eines Lastfahrzeuges hochschwenken zu können, wird diese durch Lösen eines Bolzens, welcher in der Arbeitsstellung nach Fig. 1a die Bohrung 8 an der Stütze 1 und die Bohrung 8' an einem fahrzeugfesten Tragteil 9 übereinanderhält, um einen zweiten Bolzen, der nunmehr eine erste fahrzeugfeste Schwenkachse 5 bildet, schwenkbar gemacht. Die Stütze 1 verschwenkt sich dadurch in die in Fig. 1b dargestellte Lage, in welcher ihr Schwerpunkt unterhalb der Schwenkachse 5 liegt. Um aus dieser Stellung in jene nach Fig. 1c zu gelangen, ist es lediglich notwendig, die Stütze 1 durch Betätigung ihrer Hydraulik weiter zu verkürzen. Diese Verkürzung führt deshalb zu einem Verschwenken der Stütze, weil die Stütze 1 im Punkt 10 gelenkig mit einer Teleskopstange 2 verbunden ist, welche sich während des Hochschwenkens der Stütze in ihrer kürzesten Stellung befindet. Diese Teleskopstange ist ihrerseits, wie im Detail aus Fig. 2 besser ersichtlich, über eine Schwenkachse 11 mit einem Schwenkteil 3 verbunden, der um eine zweite fahrzeugfeste Schwenkachse 4 verschwenkbar ist.

In der in Fig. 1b dargestellten Lage bilden die Achsen 5, 11 und 10 ein Dreieck, in dem die Verbindungslinien der Achsen 5 und 11 bzw. 11 und 10 konstante Längen haben. Eine Verkürzung der Grundlinie, also des Abstandes der Achsen 5 und 10, durch weiteres Einziehen der Stütze 1 führt somit notwendigerweise zu einer Verkleinerung des Winkels zwischen den Verbindungslinien der Achsen 5 und 11 einerseits, 11 und 10 andererseits. Ein Verschwenken des Schwenkteiles 3 während dieses Übergangs von Fig. 1b in Fig. 1c ist dadurch ausgeschlossen, daß der Schwenkteil 3 an einem Anschlag, nämlich der ersten fahrzeugfesten Schwenkachse 5 der Stütze 1 anliegt.

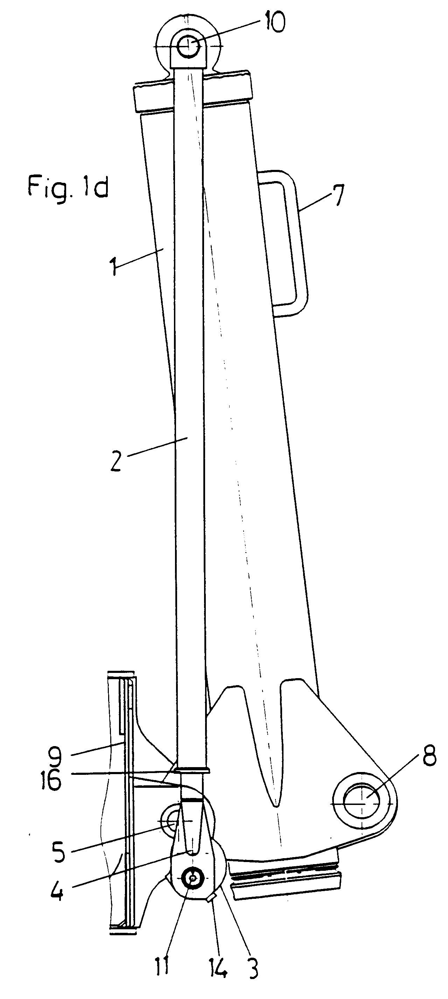

In der Stellung gemäß Fig. 1c liegen die Achsen 10, 4 und 11 in einer Geraden. Bei einer weiteren Drehung der Stütze kann sich der Schwenkteil 3 vom Anschlag 5 abheben, sodaß von nun an die zweite fahrzeugfeste Schwenkachse 4 zur ortsfesten Drehachse sowohl des Schwenkteiles 3 wie der Teleskopstange 2 wird. Der Winkel zwischen den Schwenkachsen 5 und 4 einerseits, 4 und 10 andererseits, verringert sich bei weiterer Verkürzung der Stütze 1, bis die Endstellung nach Fig. 1d erreicht ist.

Die Rückführung der Stütze aus der Lage nach Fig. 1d in jene nach Fig. 1b erfolgt durch Ausfahren der Stütze 1. Um in die Ausgangsstellung nach Fig. 1a, in welcher sich die Bohrungen 8 und 8' decken, zu gelangen, ist es nun lediglich noch notwendig, mittels des Handgriffes 7 die Stütze 1 geringfügig nach links zu verschwenken.

Wie Fig. 3 zeigt, ist es grundsätzlich möglich, auch die zuletzt erwähnte Verschwenkung der Stütze 1 aus der Stellung gemäß Fig. 1b in die Grundstellung nach Fig. 1a zu mechanisieren. Hiezu ist es lediglich notwendig, in der Teleskopstange 2 eine Zugfeder 13 anzuordnen, welche die Stütze 1 in eine durch einen Anschlag 12 definierte Grundstellung zurückführt, wie dies in Fig. 3a dargestellt ist. Außer der Zugeinrichtung in der Teleskopstange 2 muß lediglich noch eine Einrichtung vorgesehen sein, welche das Abheben der Schwenkachse 11 vom Anschlag 5 verhindert. Theoretisch könnte dies ein Anschlag 14 sein, wie er in Fig. 1 und 2 dargestellt ist, da ein solcher Anschlag den Winkel zwischen Schwenkteil 3 und Teleskopstange 2 begrenzt. Aus Festigkeitsüberlegungen günstiger ist allerdings ein Winkelteil 15, welcher in der Stellung nach Fig. 3a das obere Ende der Teleskopstange 2 sichert.

Solange also die Teleskopstange 2 unter Zug steht, drückt sie die Stütze gemäß Fig. 3a in die Grundstellung. Erst sobald der Anschlag 16 die weitere Verkürzung der Teleskopstange 2 verhindert, kommt es bei weiterer Verkürzung der Stütze 1 zu dem anhand von Fig. 1 und 2 beschriebenen Bewegungsablauf.

## Patentansprüche

1. Einrichtung zum Hochschwenken einer hydraulisch ein- und ausfahrbaren Stütze (1) eines Lastfahrzeuges um eine erste fahrzeugfeste Schwenkachse (5), wobei das freie Ende der Stütze (1) an einer begrenzt einfahrbaren Teleskopstange (2) angelenkt ist, dadurch gekennzeichnet, daß die Teleskopstange (2) an einem Schwenkteil (3) schwenkbar gelagert ist, der um eine zweite fahrzeugfeste Achse (4) bis zu einem fahrzeugfesten Anschlag verschwenkbar ist.

2. Einrichtung nach Anspruch 1, dadurch gekennzeichnet, daß der fahrzeugfeste Anschlag für den Schwenkteil (3) durch die erste fahrzeugfeste Schwenkachse (5) der Stütze (1) gebildet ist.

3. Einrichtung nach Anspruch 1 oder 2, dadurch gekennzeichnet, daß die Teleskopstange (2) von einer im Sinne ihrer Verkürzung wirkenden Kraft beaufschlagt ist und die Schwenkbewegung der Teleskopstange (2) relativ zum Schwenkteil (3) begrenzt ist.

## Claims

1. Device for swinging up a truck support (1), which can be moved in and out hydraulically, around a first swilling axis (5) mounted stationarily on the vehicle, wherein the free end of the support (1) is hinged to a telescope rod (2), which can be retracted to a limited degree, characterized in that the telescope rod (2) can be swivelled at a swivelling member (3) which can be swivelled around a second axis (4), which is mounted stationarily on a vehicle, up to a stop which is mounted stationarily on a vehicle.

2. Device as claimed in claim 1, characterized in that the stop, mounted stationarily on a vehicle, for the swivelling member (3) is formed by the first swivelling axis (5), which is mounted stationarily on a vehicle, of the support (1).

3. Device as claimed in claim 1 or 2, characterized in that the telescope rod (2) is loaded by a force acting in the sense of its shortening, and the swivelling motion of the telescope rod (2) is limited relative to the swivelling member (3).

## Revendications

1. Dispositif pour faire pivoter un vérin hydraulique stabilisateur (1) d'un poids lourd vers le haut autour d'un premier axe de pivotement (5) solidaire du véhicule, l'extrémité libre du vérin (1) étant articulée sur une tige telescopique à mouvement de rentrée limité, caractérisé en ce que la tige telescopique (2) est montée de façon pivotante sur une pièce pivotante (3) qui peut être tournée autour d'un second axe (4) solidaire du véhicule jusqu'à une butée solidaire du véhicule.

2. Dispositif selon la revendication 1, caractérisé en ce que la butée solidaire du véhicule qui est prévue pour la pièce pivotante (3) est constituée par le premier axe de pivotement (5), solidaire du véhicule, du vérin (1).

3. Dispositif selon la revendication 1 ou 2, caractérisé en ce que la tige telescopique (2) est sollicitée par une force agissant dans le sens de son raccourcissement et le mouvement de pivotement de la tige telescopique (2) par rapport à la pièce pivotante (3) est limité.
